(19) Europäisches Patentamt
European Patent Office
Office européen des brevets

(11) Numéro de publication: **0 312 435 A1**

(12) # DEMANDE DE BREVET EUROPEEN

(21) Numéro de dépôt: **88402553.7**

(51) Int. Cl.[4]: **C 08 G 79/02**

(22) Date de dépôt: **10.10.88**

(30) Priorité: **14.10.87 FR 8714215**

(43) Date de publication de la demande: **19.04.89 Bulletin 89/16**

(84) Etats contractants désignés: **AT BE CH DE ES FR GB GR IT LI LU NL SE**

(71) Demandeur: **ATOCHEM**
**4 & 8, Cours Michelet La Défense 10**
**F-92800 Puteaux (FR)**

(72) Inventeur: **Bordere, Serge**
**Villa Caplanne 9 rue Caplanne**
**F-64140 Billere (FR)**

**Pagniez, Guy**
**2 Bois de l'Eglise**
**F-64230 Poey de Lescar (FR)**

**Potin, Philippe**
**9 Rue des Pâquerettes**
**F-64140 Billere (FR)**

(74) Mandataire: **Rochet, Michel et al**
**ATOCHEM Département Propriété Industrielle La Défense 10 Cédex 42**
**F-92091 Paris La Défense (FR)**

(54) **Procédé de purification des polyorganophosphazènes bruts obtenus par co-substitution de polydichlorophosphazènes.**

(57) L'invention concerne la purification des polyorganophosphazènes bruts obtenus par co-substitution de polydichlorophosphazènes au moyen de réactifs nucléophiles.

Le procédé consiste à effectuer, au sein d'un même appareil qui peut être constitué par un malaxeur discontinu, à la fois l'élimination du ou des solvants présents dans le milieu de synthèse des polyorganophosphazènes et le lavage du milieu obtenu après ladite élimination au moyen d'un produit non-solvant du polymère mais miscible avec les autres produits présents dans ledit milieu.

Ce procédé est remarquable à la fois par la simplicité et l'efficacité de cette technique d'isolement du polymère.

EP 0 312 435 A1

## Description

### PROCEDE DE PURIFICATION DES POLYORGANOPHOSPHAZENES BRUTS OBTENUS PAR CO-SUBSTITUTION DE POLYDICHLOROPHOSPHAZENES

L'invention concerne un procédé de purification des polyorganophosphazènes bruts obtenus par co-substitution de polydichlorophosphazènes.

Les polyorganophosphazènes résultant de la réaction de co-substitution de polydichlorophosphazènes par des réactifs nucléophiles comprennent une pluralité de motifs de formule :

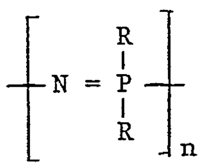

(I)

dans laquelle les symboles R, qui possèdent au moins deux significations différentes à l'intérieur d'un même motif et/ou d'un motif à l'autre, peuvent notamment représenter des motifs alcoxy, fluoroalcoxy, phénoxy, alkylamino ou arylamino. Des exemples de tels polyorganophosphazènes sont donnés par exemple dans Polymer News, Vol. 5 n° 1, pp 9-17 (1978).

Parmi ces polyorganophosphazènes, l'invention concerne tout particulièrement les polymères amorphes, se présentant généralement sous forme d'une gomme à propriétés plus ou moins élastomériques.

L'isolement de ces polymères du milieu dans lequel ils ont été synthétisés présente quelque difficulté. En effet la dernière étape de leur préparation consiste à faire réagir des composés nucléophiles tels que des alcoolates ou phénates de sodium avec le polydichlorophosphazène le plus souvent au sein d'un hydrocarbure ou d'un éther ou d'un mélange des deux (voir par exemple les brevets américains 4.514.550, 3.970.553, 4.576.806 ou l'article de Polymer News, loc. cit.).

En fin de réaction, l'excès de nucléophile est généralement neutralisé au moyen d'un acide tel que l'acide chlorhydrique ou l'acide sulfurique.

Le polyorganophosphazène se retrouve ainsi à une concentration généralement comprise entre 5 et 35 % dans un milieu contenant un hydrocarbure et/ou un éther, un excès de phénol ou d'alcool, éventuellement d'autres réactifs de substitution et un sel, généralement de sodium.

On a déjà proposé (brevet américain 4.116.785) de précipiter le polymère en mettant la solution décrite ci-avant en contact avec un non-solvant tel que le méthanol. Un tel procédé requiert la mise en oeuvre d'une quantité de solvant pouvant représenter 20 à 40 fois la quantité de polymère à séparer. De ce fait, l'obtention du polymère nécessite l'emploi d'un réacteur de grande capacité par rapport à la quantité de polymère récupérée. De plus, lorsque le polymère se présente sous forme d'une gomme plus ou moins collante, ce qui se produit lorsque le polymère porte au moins deux substituants différents, l'extraction du polymère du réacteur dans lequel il a été produit doit se faire le plus souvent manuellement.

L'invention propose une technique exonérant des difficultés et problèmes posés par les procédés antérieurs tels que rappelés ci-avant.

Cette technique consiste à effectuer l'isolement du polyorganophosphazène par élimination des solvants de synthèse et à assurer le lavage du polymère au sein du même appareil.

Plus précisément l'invention a pour objet un procédé de purification des élastomères de polyorganophosphazène bruts obtenus par cosubstitution de polydichlorophosphazènes au moyen d'agents nucléophiles, lesdits polyorganophosphazènes bruts étant constitués par un milieu comprenant les polyorganophosphazènes, le ou les solvants mis en oeuvre pour la réaction de co-substitution, l'excès d'agents nucléophiles et/ou leurs produits de neutralisation et le cas échéant les sels de métaux alcalins résultant de ladite neutralisation, ledit procédé étant caractérisé en ce qu'il consiste à effectuer au sein du même appareil, d'une part l'élimination du ou des solvants présents dans le milieu de synthèse de polyorganophosphazène et d'autre part le lavage du milieu obtenu après ladite élimination au moyen d'un produit non-solvant du polyorganophosphazène et miscible avec les autres produits présents dans ledit milieu.

L'élimination du ou des solvants s'effectue de préférence par distillation sous pression réduite. Le lavage peut être effectué à une température pouvant être comprise entre la température ambiante, par exemple 20° C et 200° C.

Le choix de la température du lavage pourra être dicté notamment par la nature du solvant et la pression à laquelle il est possible ou souhaitable de travailler. Pour autant que soient respectées les caractéristiques de non-solubilité du polymère et miscibilité des autres produits, il est avantageux d'opérer à une température la plus élevée possible. Ce choix favorise en général la solubilité et la vitesse de diffusion des produits à extraire de la masse du polymère.

A titre d'illustration des appareils permettant la mise en oeuvre du procédé conforme à l'invention, on citera les malaxeurs discontinus dont la cuve peut être chauffée et, éventuellement, placée sous pression réduite.

Ces appareils sont largement décrits dans la littérature et leur géométrie ou leurs dimensionnements ne constituent pas en eux-mêmes un objet de l'invention. On peut, pour la mise en oeuvre du procédé conforme à l'invention, utiliser différents types de malaxeurs, se différenciant par exemple par le nombre et/ou la géométrie des bras de malaxage, la disposition horizontale ou verticale desdits bras, la complexité plus ou moins importante de leurs mouvements, qu'il s'agisse par exemple de systèmes associant un déplacement axial au mouvement de rotation ou de systèmes dans lesquels l'axe de rotation des bras est lui-même fixé sur une platine tournante, imprimant ainsi aux bras rotatifs un mouvement planétaire. De tels malaxeurs peuvent comporter des systèmes annexes tels que râcleurs, déflecteurs, vis d'extrusion permettant d'extraire le polymère en fin d'opération.

Quel que soit le type de malaxeur utilisé, il conviendra, si nécessaire de connecter audit malaxeur des moyens permettant la distillation des solvants, la condensation des vapeurs et la collecte des condensats. La distillation s'accompagnant d'une production plus ou moins abondante de mousse, il est avantageux de prévoir une rehausse pour agrandir le volume utile de la cuve du malaxeur ou de disposer, entre la cuve et le condenseur de vapeur une capacité permettant la destruction de la mousse par expansion. Selon une variante recommandée, une grille sera disposée à la sortie des vapeurs de la cuve dans le but de retenir les particules de polymère qui pourraient être entraînées.

De la même manière il conviendra si nécessaire de raccorder au malaxeur un système d'alimentation en produit de lavage.

Le procédé conforme à l'invention peut être appliqué à la purification des divers polyorganophosphazènes comportant une pluralité de motifs de formule (I) donnée précédemment.

Il convient tout particulièrement pour la purification de polyor ganophosphazènes dans lesquels une partie au moins des symboles R représentent des radicaux monovalents choisis dans le groupe constitué par les radicaux de formules :

$R_1$ - O - (II) ou $R_2R_3$ - N - (III)

dans lesquelles le symbole $R_1$ peut représenter un radical alkyle renfermant de 1 à 12 atomes de carbone, non substitué ou partiellement substitué par des atomes de fluor ; un radical cycloalkyle renfermant 5 ou 6 atomes de carbone ; un radical aryle mono- ou polycyclique, éventuellement mono- ou polysubstitué par un atome de chlore, par un radical alcoxy renfermant de 1 à 3 atomes de carbone, par un radical alkyle, linéaire ou ramifié pouvant renfermer jusqu'à 10 atomes de carbone ou par un radical allyle ; le symbole $R_2$ peut représenter un radical alkyle ou alcényle renfermant jusqu'à 6 atomes de carbone ; un radical aryle mono ou polycyclique ; un radical alkylaryle renfermant jusqu'à 12 atomes de carbone ; le symbole $R_3$ peut avoir l'une des significations du symbole $R_2$ ou représenter un atome d'hydrogène ; en outre deux symboles R d'un même motif peuvent former ensemble un radical de formules :

$-O-R_4-O-$ (IV)

ou $-NR_3-R_5-NR_3-$ (V)

dans lesquelles les symboles $R_4$ ou $R_5$ peuvent représenter un des radicaux divalents correspondant aux radicaux monovalents représentés par $R_1$ et $R_2$, le symbole $R_3$ ayant la signification donnée précédemment.

Lorsque le symbole R ne représente pas un radical ayant l'une des formules II, III, IV ou V, il peut représenter un radical monovalent pouvant être choisi dans le groupe constitué par les radicaux alkyle, cycloalkyle, aryle, alkylaryle, alcoxyaryle ou aralkyle, les radicaux alkyle ou la fraction alkyle des radicaux précités pouvant être substitués par un ou plusieurs atomes de fluor, lesdits radicaux représentés par le symbole R pouvant renfermer jusqu'à 18 atomes de carbone.

A titre d'illustration des radicaux pouvant être représentés par $R_1$, on citera notamment les radicaux de formules :

$CH_3$ - ; $CH_3CH_2$ - ; $CF_3CH_2$ - ; p.$C_9H_{17}$-$C_6H_4$-$C_3F_7CH_2$ - ; $HC_4F_8CH_2$ - ; $C_6H_5$ - ; $CH_2$ = CH-$CH_2$-m.Cl--$C_6H_4$ - ; p.Cl-$C_6H_4$ - ; p.$C_2H_5$-$C_6H_4$ - ; p. $CH_3O$-$C_6H_4$ - ; p.(sec $C_4H_9$)$C_6H_4$ - ; o.($CH_2$ = CH-$CH_2$)-$C_6H_4$ - ; p.($CH_2$ = CH-$CH_2$)o.($CH_3O$)$C_6H_3$-

A titre d'illustration des radicaux pouvant être représentés par $R_2$ et, le cas échéant $R_3$, on citera notamment les radicaux de formule :

$CH_3$- ; $C_6H_5$- ; p.$CH_3O$-$C_6H_4$- ; $CH_2$ = CH-$CH_2$ -

A titre d'illustration des radicaux pouvant être représentés par R lorsque ces radicaux ne répondent à aucune des formules II, III, IV ou V, on peut citer les radicaux de formules :

$C_6H_5$- ; $C_3F_7CH_2$- ;

$HCF_2C_3F_6CH_2$-

Dans les polymères précités, un certain pourcentage, par exemple inférieur à 30 % des motifs de formule (I) peut renfermer un radical R comportant une ou plusieurs insaturations éthyléniques, ledit radical pouvant par exemple être constitué par un groupement

$CH_2$ = CH-$CH_2$-$C_6H_4$-O,

le substituant allyle pouvant notamment se trouver en position ortho sur le groupement phenoxy, ou par un groupement

($CH_2$ = CH-$CH_2$)$_2$N-.

Le procédé conforme à l'invention s'applique tout particulièrement aux polyorganophosphazènes dans la formule desquels on trouve les radicaux énumérés précédemment, et une valeur de n telle que la viscosité intrinsèque desdits polymères (mesure effectuée dans le THF à 30°C) soit comprise entre 10 et 250 ml/g.

Ainsi qu'il a été précisé, les polyorganophosphazènes précités peuvent être préparés par réaction de

produits nucléophiles avec des polydichlorophosphazènes. Compte tenu des diverses significations possibles pour R et en particulier de celles énumérées ci-avant, les produits nucléophiles peuvent, d'une manière générale, être choisis parmi les alcoolates et phénates de formule :
$R_1OM$ ou $MOR_4OM$
et les amines primaires et secondaires de formule :
$R_2R_3NH$ ou $HNR_3R_5R_3NH$
dans lesquelles les symboles $R_1$, $R_2$, $R_3$, $R_4$ et $R_5$ ont les significations données précédemment, le symbole M représentant un métal alcalin et notamment le sodium et le lithium.

D'une manière générale, le polydichlorophosphazène est mis en contact avec les réactifs nucléophiles en excès, ledit excès des fonctions réactives du produit nucléophile par rapport aux atomes de chlore du polydichlorophosphazène pouvant atteindre 15 voir 20 %.

Cette réaction de substitution s'effectue habituellement en milieu solvant. A titre d'illustration des solvants utilisables, on citera notamment les hydrocarbures aromatiques, éventuellement substitués par un ou plusieurs atomes ou groupements choisis dans le groupe constitué par les radicaux alkyles ayant de 1 à 4 atomes de carbone, les atomes de chlore ou les groupements nitro, tels que le benzène, le toluène, le xylène, le dichloro-2,4 toluène, le dichloro-1,2 benzène, le trichlorobenzène, le nitrobenzène, les benzènes tétraméthylés tels que le tétraméthyl-1,2,3,4 benzène ; les hydrocarbures aromatiques partiellement hydrogénés tels que la tétraline ; les hydrocarbures cycloaliphatiques tels que le cyclopentane, le cyclohexane, le cycloheptane, la décaline, le méthylcyclohexane ; les éthers tels que le tétrahydrofurane (THF), le dioxane, l'éthylèneglycol diméthyl- ou diéthylether, le diéthylèneglycol diméthyl- ou diéthylether.

Le milieu réactionnel de la fin de la réaction de co-substitution comprend ainsi d'une part le polyorganophosphazène résultant de la co-substitution, le cas échéant l'alcool ou le phénol et le sel de métal M résultant de la neutralisation de l'excès de réactif nucléophile, ainsi que le ou les solvants utilisés par la réaction de co-substitution.

Dans le procédé conforme à l'invention ce milieu est envoyé dans un malaxeur permettant d'assurer à la fois l'élimination des solvants et le lavage du milieu résultant de cette opération et l'entraînement des produits non encore éliminés.

L'élimination des solvants peut se faire par distillation, éventuellement sous pression réduite. La masse obtenue après cette première opération peut être ensuite lavée, dans la même malaxeur, au moyen d'un liquide organique non-solvant du polymère mais miscible avec les solvants résiduels et les alcools et phénols. Ce non-solvant peut être choisi notamment dans le groupe constitué par les alcools primaires, secondaires et tertiaires renfermant de 1 à 6 atomes de carbone, tels que le méthanol, l'isopropanol.

On peut effectuer un ou plusieurs lavages au moyen d'un tel non-solvant, en suivant l'efficacité du lavage par examen par spectrographie U.V. de la solution de lavage comprenant le non-solvant du polymère, les solvants de synthèse, les alcools/phénols de la neutralisation, le sel de métal alcalin.

Les lavages au moyen du non-solvant organique peuvent être suivis et/ou entrecoupés de lavages à l'eau distillée et/ou au moyen d'un mélange eau/non-solvant pour autant que les deux produits soient miscibles.

La technique de purification des polyorganophosphazènes bruts obtenus par co-substitution de polydichlorophosphazènes, telle que décrite ci-avant associe une grande simplicité à une remarquable efficacité. En particulier elle met en oeuvre un dispositif du type malaxeur auquel il est facile de raccorder, si nécessaire, un système de chauffage et de mise sous vide et des moyens de circulation de liquides additionnels tels que le non-solvant organique ou l'eau dont l'emploi a été mentionné plus haut. La fonction de malaxage permet une agitation efficace d'un milieu plus ou moins visqueux et un contact intime de cette masse visqueuse avec les liquides de lavage.

Les exemples suivants illustrent l'invention.

Dans ces exemples, le milieu réactionnel introduit dans les malaxeurs présente la composition pondérale suivante :

| | | |
|---|---|---|
| . Polyphosphazène de formule I, dans laquelle : 52 % des R représentent p.$CH_3O$-$C_6H_4O$-, 39 % des R représentent p.(sec. $C_4H_9$)-$C_6H_4O$- et 9 % des R représentent o.($CH_2$=CH-$CH_2$)-$C_6H_4O$- | | 13,66 % |
| . Trichlorobenzène | | 10,90 % |
| . Diethylène glycol diméthyléther | | 66,32 % |
| . Phénols dont : | | 3,30 % |
| - p.méthoxyphénol | 1,6 | |
| - p. sec. butyl phénol | 1,2 | |
| - o.allylphénol | 0,5 | |
| . NaCl | | 5,80 % |

EXEMPLE 1

La solution décrite ci-avant est introduite dans un malaxeur à bras en Z du type ML2 de la Société BAKER et PERKINS, équipé d'une sortie de vapeurs, comprenant une capacité d'expansion de la mousse, un filtre d'arrêt des particules de polymères, un condenseur et une recette de solvants condensés. Le malaxeur est mis en fonctionnement et la cuve est chauffée à 110° C, l'ensemble étant maintenu sous une pression réduite à 1600 Pa.

On introduit et traite ainsi 2515 g de la solution en 180 mn, récupérant ainsi 1534 g de diéthylèneglycol diméthyléther, 220 g de trichlorobenzène et des traces de phénols.

A l'issue de cette opération le mélange résiduel se présente sous la forme d'un fluide visqueux.

Grace à un système d'alimentation en solvant comprenant un conteneur, une arrivée à l'intérieur de la cuve du malaxeur, une pompe d'alimentation et un retour vers le conteneur par débordement à travers le filtre mentionné plus haut, on fait circuler 5 l d'isopropanol à l'intérieur du malaxeur en fonctionnement, au débit de 100 l/h. Le milieu est maintenu à 65° C pendant cette opération.

On suit l'entraînement des solvants et phénols résiduels par spectrographie U.V. Lorsque la densité optique de la solution de lavage n'augmente plus, ce qui se produit au bout d'environ 30 mn, on renouvelle l'isopropanol du conteneur.

On lave ainsi 5 fois le milieu au moyen d'isopropanol en suivant l'efficacité dudit lavage par mesure de la densité optique jusqu'à obtenir une valeur négligeable.

On introduit ensuite dans le malaxeur de l'eau distillée et poursuit ce lavage jusqu'à ce que l'eau n'entraîne plus la précipitation de chlorure d'argent lors de l'addition de nitrate d'argent.

On effectue un dernier lavage au moyen de 5 l d'isopropanol.

Le polymère ainsi lavé est laminé en plaques d'environ 5 mm d'épaisseur puis mis à sécher pendant 12 heures à 60° C sous pression réduite à 133 Pa. On recueille 342 g de produit sec.

Les phénols résiduels sont dosés par chromatographie en phase gazeuse d'une solution de ce polymère dans du tétrahydrofuranne. La quantité de chacun des trois phénols est inférieure au seuil de détection de 40 ppm. La quantité de NaCl, mesurée par analyse du sodium, est de 220 ppm.

EXEMPLE 2

On utilise un malaxeur à axes verticaux et mouvements planétaires modèle FH 1,5S de la Société DRAISWERKE.

On introduit la même solution que précédement dans ce malaxeur et l'évaporation des solvants est obtenue par chauffage de la cuve à 115° C sous pression réduite à 2000 Pa. A partir de 4750 g de solution, on recueille 2970 g de diéthylèneglycol diméthyléther, 480 g de trichlorobenzène et des traces de phénols.

La gomme restant dans le malaxeur est lavée au moyen de méthanol mis en circulation par un système identique à celui de l'exemple 1.

Après 2 heures de lavage continu à 30° C, la densité optique en U.V. du méthanol sortant du malaxeur est négligeable.

La gomme est ensuite lavée à l'eau puis au méthanol, puis laminée et séchée dans les conditions de l'exemple 1.

On recueille 645 g d'un polymère dans lequel la quantité de phénols résiduels est inférieure à la limite de

détection par chromatographie en phase gazeuse c'est-à-dire 40 ppm. La quantité de NaCl contenue dans le polymère, mesurée comme dans l'exemple 1 est de 240 ppm.

## Revendications

1. Procédé de purification des élastomères de polyorganophosphazène bruts obtenus par co-substitution de polydichlorophosphazène au moyen d'agents nucléophiles, lesdits polyorganophosphazènes bruts étant constitués par un milieu comprenant les polyorganophosphazènes, le ou les solvants mis en oeuvre pour la réaction de co-substitution, l'excès d'agents nucléophiles et/ou leurs produits de neutralisation et le cas échéant les sels de métaux alcalins résultant de ladite neutralisation, ledit procédé étant caractérisé en ce qu'il consiste à effectuer au sein du même appareil, d'une part l'élimination du ou des solvants présents dans le milieu de synthèse de polyorganophosphazène et d'autre part le lavage du milieu obtenu après ladite élimination au moyen d'un produit non-solvant du polyorganophosphazène et miscible avec les autres produits présents dans ledit milieu.

2. Procédé selon la revendication 1, caractérisé en ce que l'élimination du ou des solvants s'effectue par distillation sous pression réduite.

3. Procédé selon l'une quelconque des revendications 1 ou 2, caractérisé en ce que le lavage est effectué à une température comprise entre la température ambiante et 200° C.

4. Procédé selon l'une quelconque des revendications 1 à 3, caractérisé en ce que l'appareillage utilisé pour la mise en oeuvre dudit procédé est un malaxeur discontinu.

5. Procédé selon la revendication 4, caractérisé en ce que l'appareillage comprend un malaxeur discontinu, un système permettant l'élimination des solvants et un système comportant des moyens de circulation du produit non-solvant du polyorganophosphazène et miscible avec les autres produits présents dans le milieu réactionnel.

6. Application du procédé selon l'une quelconque des revendications 1 à 5 à la purification de polyorganophosphazènes bruts tels qu'obtenus par co-substitution au moyen de réactifs nucléophiles de polydichlorophosphazènes, lesdits polyorganophosphazènes comprenant une pluralité de motifs de formule :

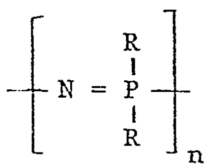

(I)

dans laquelle les symboles R, qui présentent au moins deux significa tions différentes à l'intérieur d'un même motif et/ou d'un motif à l'autre pouvant représenter des motifs alcoxy, fluoroalcoxy, phénoxy, alkylamino ou arylamino.

7. Application selon la revendication 6, caratérisée en ce que, dans la formule (I), une partie au moins des symboles R, représentent des radicaux monovalents choisis dans le groupe constitué par les radicaux de formules :

$R_1$ - O - (II) ou $R_2R_3$ - N - (III)

dans lesquelles le symbole $R_1$ peut représenter un radical alkyle renfermant de 1 à 12 atomes de carbone, non substitué ou partiellement substitué par des atomes de fluor ; un radical cycloalkyle renfermant 5 ou 6 atomes de carbone ; un radical aryle mono- ou polycyclique, éventuellement mono- ou polysubstitué par un atome de chlore, par un radical alcoxy renfermant de 1 à 3 atomes de carbone, par un radical alkyle, linéaire ou ramifié pouvant renfermer jusqu'à 10 atomes de carbone ou par un radical allyle ; le symbole $R_2$ peut représenter un radical alkyle ou alcényle renfermant jusqu'à 6 atomes de carbone ; un radical aryle mono ou polycyclique ; un radical alkylaryle renfermant jusqu'à 12 atomes de carbone ; le symbole $R_3$ peut avoir l'une des significations du symbole $R_2$ ou représenter un atome d'hydrogène ; deux symboles R d'un même motif pouvant former ensemble un radical divalent de formules :

$-O-R_4-O-$ (IV) ou $-NR_3-R_5-NR_3-$ (V)

dans lesquelles les symboles $R_4$ et $R_5$ peuvent représenter un des radicaux divalents correspondant aux radicaux monovalents cités plus haut pour $R_1$ et $R_2$, le symbole $R_3$ ayant la signification donnée précédemment.

8. Application selon la revendication 7, caractérisée en ce que, lorsqu'ils ne représentent pas les radicaux de formule II, III, IV ou V, les symboles R peuvent représenter un radical monovalent pouvant être choisi dans le groupe constitué par les radicaux alkyle, cycloalkyle, aryle, alkylaryle, alcoxyaryle, aralkyle renfermant jusqu'à 18 atomes de carbone, lesdits radicaux alkyle ou la fraction alkyle des radicaux

précités pouvant être substituée par un ou plusieurs atomes de fluor.

Office européen des brevets

# RAPPORT DE RECHERCHE EUROPEENNE

Numero de la demande

EP 88 40 2553

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 162 631 (ETHYL CORP.)<br>* Revendications 1,7-11; page 10, ligne 7 - page 12, ligne 1 *<br>--- | 1,2,6-8 | C 08 G 79/02 |
| Y | EP-A-0 000 790 (THE FIRESTONE TIRE & RUBBER CO.)<br>* Revendications 1,2,6-8; page 6, ligne 18 - page 7, ligne 6 *<br>--- | 1,2,6-8 | |
| A | DE-A-2 334 402 (MO OCH DOMSJö AB)<br>* Revendications 1-3; page 9, lignes 1-12 *<br>--- | 1-3,6 | |
| A | RUSSIAN CHEMICAL REVIEWS, vol. 38, no. 8, 1969, pages 667-682; V.V. KIREEV et al.: "Polyphosphazenes"<br>* Page 673, colonne de gauche, ligne 24 - page 674, ligne 9, colonne de gauche, ligne 16 *<br>--- | 1,7 | |
| A | US-A-4 141 937 (C.R. BERGERON)<br>* Revendications 1-4,8-10; colonne 5, lignes 10-13; colonne 7, lignes 10-45 *<br>----- | 1 | **DOMAINES TECHNIQUES RECHERCHES (Int. Cl.4)**<br>C 08 G |

Le présent rapport a été établi pour toutes les revendications

| Lieu de la recherche | Date d'achèvement de la recherche | Examinateur |
|---|---|---|
| LA HAYE | 05-12-1988 | VOIGTLAENDER R.O.J. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)